# EUROPEAN PATENT SPECIFICATION

(11) **EP 1 753 799 B1**
(45) Date of publication and mention of the grant of the patent: **03.05.2017**
(21) Application number: 04753227.0
(22) Date of filing: 25.05.2004
(51) Int. Cl.: C08G 18/38, C08G 18/61

(54) **PROCESS FOR PREPARING POLYURETHANE FOAMS HAVING REDUCED VOC EMISSIONS**
VERFAHREN ZUR HERSTELLUNG VON POLYURETHANSCHAUMSTOFFEN MIT VERRINGERTEN VOC-EMISSIONEN
PROCEDE DE PREPARATION DE MOUSSES DE POLYURETHANE AYANT DES EMISSIONS EN COMPOSES ORGANIQUES VOLATILS REDUITES

(43) Date of publication of application: 21.02.2007
(73) Proprietor: Momentive Performance Materials Inc., Waterford, NY 12188 (US)
(72) Inventor: MULLER, Louis, F-01220 Divonne-les-bains (FR); EL GHOBARY, Hassan, CH-1205 Geneva (CH); PONTHET, Fabrice, CH 1213, Onex (CH)
(74) Representative: Herrmann, Uwe
(86) International application number: PCT/US2004/016358
(87) International publication number: WO 2005/118668

(56) References cited:
- DE-A- 3 939 698
- DE-C- 4 108 326
- GB-A- 2 338 239
- US-A- 3 243 475
- US-A1- 2004 152 796

## Description

This invention relates generally to polyurethane foams having reduced volatile organic compound (s) emissions. More particularly, this invention is directed to high resilience (HR) flexible polyurethane foams having reduced VOC emissions employing a silicone-based surfactant.

### DESCRIPTION OF THE RELATED ART

Polyurethane foams are produced by reacting an organic polyisocyanate with compounds containing two or more active hydrogens, generally in the presence of blowing agent (s), silicone-based surfactants and other auxiliary agents. The active hydrogen-containing compounds are typically polyols, primary and secondary polyamines, and water. Two major reactions are promoted by the catalysts among the reactants during the preparation of polyurethane foam, gelling and blowing. These reactions must proceed simultaneously and at a competitively balanced rate during the process in order to yield polyurethane foam with desired physical properties.

Owing to their outstanding physical properties, polyurethane foams are used in a very wide range of areas. A particularly important market for various types of polyurethane foams is the automotive industry. Polyurethane foams are typically used in motor vehicles as roof linings, for interior cladding of the doors, for punched-out sun visors, and for seat systems.

Relevant prior art comprises the following documents: DE 39 39 698 A discloses polyester based polyurethane foam materials which are intended for shoe sole applications. GB 2 338 239 A discloses a process of forming polyurethane foam intended for sealing applications. The process comprises reacting a polyisocyanate and a hydroxyl-terminated siloxane. US 3,243,475 A relates to polyesterpolyol-based polyurethane foams having an enhanced resistance to hydrolysis due to addition of a certain organosilicone compound.

A problem associated with the production of molded foams, which is usually worse in the case of rapid cure foam formulations, is foam tightness. A high proportion of closed cells causes foam tightness at the time the molded foam part is removed from the mold. If left to cool in that state, the foam part will generally shrink irreversibly. A high proportion of open cells are required if the foam is to have a desired high resiliency. Consequently, foam cells have to be opened physically either by crushing the molded part or inserting it into a vacuum chamber. Many strategies have been proposed, both chemical and mechanical, to minimize the quantity of closed cells at demold.

One such strategy to provide a foam having open cells is to employ a silicone-based surfactant to stabilize the foam until the product-forming chemical reaction is sufficiently complete so that the foam is self-supporting and does not suffer objectionable collapse. Additionally, the silicone surfactant should help getting open foam at the end of the foaming process, this being particularly critical when producing HR foams. Examples of such silicon-based surfactants are short polydimethylsiloxanes surfactants having from about two to about seven siloxane units. This type of surfactant is generally of low molecular weight and mobile thus stabilizing the foam without closing the cell structure. A drawback associated with the use of this type of surfactant is that when forming components such as, for example, foam seats, headliners, sun visors, etc., employing a polyurethane foam based on this type of surfactant, the unreacted low molecular weight surfactant will volatize from the polyurethane foam and subsequently deposits on, for example, the car windows, as an oily film. This, in turn, scatters light resulting in poor lighting conditions for the driver.

Additionally, in recent years the requirements set by the automotive manufacturers for their foam suppliers have become substantially more stringent, especially with regard to an emission specification. Whereas in the past attention was focused only on the fogging behavior of the foams (DIN 75 201, determination of the fogging behavior of materials for interior automotive trim), today the content of volatile organic compounds (VOC) is also a subject of analytical determinations (e.g., Volkswagen central standard 55 031 and Daimler Chrysler PB VWT 709). The Daimler-Chrysler method requires the assignment of the emissions to individual chemical compounds in addition to the quantitative determination of the VOC and FOG value.Document US 3 243 475 discloses a process for the preparation of a polyurethane foam from 142 parts of polyisocyanate reacted with 100 parts of polyester, 5 parts of sulfonated castor oil with a water content of 50%, 3 parts of polysiloxane having groups with reactive hydrogen (see column 3, lines 9-22), 1 part of piperazine catalyst and 0,3 parts of a further silicone surfactant (see example 3). It would therefore be desirable to employ a silicon-based surfactant which provides polyurethane foams having reduced VOC emissions while imparting excellent physical properties without closing (tightening) or substantially closing the cells of the polyurethane foams. It would further be desirable to employ the silicon-based surfactant to provide high resilience flexible polyurethane foams having reduced VOC emissions.

### SUMMARY OF THE INVENTION

It is an object of the present invention to provide polyurethane foams having reduced VOC emissions and having excellent physical properties making them particularly suitable for motor vehicle applications.

It is another object of the present invention to provide semiflexible and high resilience flexible polyurethane foams having reduced VOC emissions and having excellent physical properties for motor vehicle applications.

It is yet another object of the present invention to provide silicon-based surfactants which do not volatize such that VOC emissions are substantially decreased while maintaining excellent physical properties, e. g., tensile strength, to the semiflexible and flexible polyurethane foams.

It is still yet another object of the present invention to provide silicone-based surfactants which are extremely efficient and provide polyurethane foams without splits, as well as with desired cell structure and size and to provide high resilience molded foam with good stability.

In keeping with these and other objects of the present invention, a process for preparing a polyurethane foam having reduced volatile organic compound ("VOC") emissions is provided, the process comprising the step of reacting a polyisocyanate with a polyether polyol having at least two hydroxyl groups and from 0.1 to 3 phpp of a silicone-based surfactant composition as a stabilizer for the foam, the silicone-based surfactant composition comprising a first silicone having the general formula:

M*ₜDₓD*_{y}Mᵤ (I)

wherein M* is R¹₂RSiO_{0.5}; D is R¹₂SiO; D* is R¹RSiO; M is R¹₃SiO_{0.5}; R is the same or different and is an aromatic or saturated aliphatic hydrocarbon group; R is a divalent hydrocarbon moiety, optionally interrupted with methoxy or ethoxy groups and attached to a hydroxyl end group, t and u are integers from 0-2; t+u=2; x+y=1- 4 and t+y is 1 or 2. The surfactant composition may have the first silicone, as defined above, as the sole component thereof. Alternatively, the first silicone may be used in combination with at least a silicone oil or a silicone copolymer.

In a particularly preferred embodiment of the present invention the stabilizer comprises a silicone-based surfactant of the general formula: 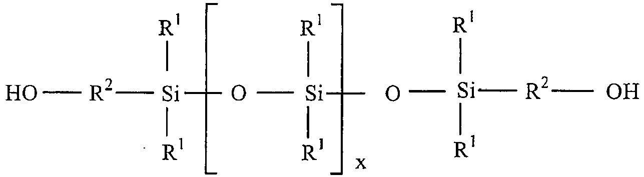 wherein R' is the same or different and is an aromatic or saturated aliphatic hydrocarbon group, R is the same or different and selected from at least a divalent hydrocarbon moiety, optionally interrupted with methoxy or ethoxy groups, and x is an integer between 2 and 4.

By utilizing the foregoing silicone-based surfactant compositions as a foam stabilizer in the manufacture of semiflexible and flexible polyurethane foams, the resulting polyurethane foams have reduced VOC emissions making them particularly suitable for use in the interiors of motor vehicles.

### DETAILED DESCRIPTION OF THE PREFERRED EMBODIMENTS

The present invention broadly relates to a process for making polyurethane foams having reduced VOC emissions. This invention is especially suitable for making semiflexible and flexible polyurethane foams using the one shot foaming, quasi-prepolymer and the pre-polymer processes. Accordingly, the present invention provides semi flexible and flexible polyurethane foams obtained from a polyurethane foam-forming reaction mixture comprising an isocyanate component, a polyether polyol and a silicone-based surfactant composition as a stabilizer for the foam in the presence of a blowing agent, water and catalyst and optional crosslinkers.

The polyurethane manufacturing process of the present invention typically involves the reaction of an isocyanate component, e. g., an organic polyisocyanate, and a polyol, e. g., a polyol having a hydroxyl number from about 15 to about 700 and preferably from about 15 to about 70 for a flexible polyurethane foam. In addition to the previously indicated materials, semiflexible and flexible polyurethane foam formulations (hereinafter referred to simply as flexible polyurethane foams) also generally include: water; an optional organic low boiling auxiliary blowing agent or an optional inert gas; a silicone-based surfactant composition as a stabilizer for the foam; a catalyst, and an optional crosslinker.

The "one shot foam process" for making polyurethane foam is a one-step process in which all of the ingredients necessary (or desired) for producing the foamed polyurethane product including the polyisocyanate, the organic polyol, water, catalysts, surfactant (s), blowing agents and the like are simply blended together, poured onto a moving conveyor or into a mold of a suitable configuration and cured. The one shot process is to be contrasted with the prepolymer process wherein a liquid prepolymer adduct of a polyisocyanate and a polyol normally having terminal isocyanate groups first is prepared in the absence of any foam-generating constituents and then the prepolymer is reacted with water in the presence of catalyst in a second step to form the solid urethane polymer.

Use of the subject silicone-based surfactant compositions in techniques such as the one-shot foaming technique, unexpectedly results in the production of high resiliency (HR) flexible polyurethane foams having little to no VOC emissions. It is believed that by utilizing the silicone-based surfactant compositions of this invention in an effective amount the silicone-based surfactant compositions will react with the polyisocyanate during formation of the polyurethane such that the surfactant will be linked to the polymer network of the resulting polyurethane to achieve little to no volatility. In this manner, the VOC emissions of the polyurethane foam are substantially reduced. Another advantage of the subject silicone-based surfactants is the stabilization action of the surfactants resulting in the production of stable and more open or more easily to open foam. This quality is demonstrated by reduced force to crush (FTC). The production of more open or more easily to open foam results in foam showing less shrinkage.

The silicone surfactants used in the invention are preferably linear, although an occurrence of branching moieties in the surfactant is also contemplated, e.g., within formula (I) above. The surfactants may be produced from hydrido functional silicones using appropriate hydrosilation reactions known to one skilled in the art to introduce the R groups into the molecule and, if desired, to introduce variation in the R¹ groups. The hydrido functional silicones can be represented by the general formula:

M'ₜDₓD*_{y}Mᵤ (II)

wherein M' is R¹₂HSiO_{0.5}; D is R¹₂SiO; D* is R¹HSiO; M is R¹₃SiO_{0.5} and R¹, t, x, y and u have the aforestated meanings. In formula (I) and (II) above, R¹ is the same or different and is an aromatic or saturated aliphatic hydrocarbon group with at least one of the R¹ groups having the hydrocarbon group attached to a hydroxyl end group for the silicone of formula II. Specific examples include methyl, ethyl, propyl, octyl, decyl, dodecyl, stearyl, phenyl, methylphenyl, dimethylphenyl, phenylethyl, cyclohexyl, methylcyclohexyl, and the like. Preferred R¹ groups are alkyl, most suitably methyl, optionally with relatively minor amounts of C₆-C₂₂ alkyl groups. The longer alkyl groups may be introduced by hydrosilation of the corresponding C₆-C₂₂ olefin. R is a divalent hydrocarbon moiety, optionally interrupted with oxyalkylene (methoxy or ethoxy) groups and attached to a hydroxyl end group. The divalent hydrocarbon moieties can be a saturated or unsaturated hydrocarbon moiety of 1 to 20 carbon atoms, including, but not limited to, a linear aliphatic hydrocarbon moiety, a branched aliphatic hydrocarbon moiety, an alicyclic hydrocarbon moiety or an aromatic hydrocarbon moiety. Stated otherwise, R can be, for example, a linear or branched alkylene group of one to about 20 carbon atoms and preferably from 1 to about 10 carbon atoms, a cyclic alkylene group of between 4 to about 10 carbon atoms, an arylene, an alkarylene, or an aralkylene group of from about 6 to about 20 carbon atoms.

A particularly preferred silicone-based surfactant composition for use herein as a stabilizer is of the general formula: 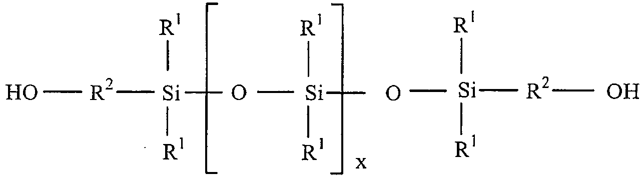 wherein R is the same or different and is an aromatic or saturated aliphatic hydrocarbon group as described above, R is the same or different and selected from at least a divalent hydrocarbon moiety as described above, optionally interrupted with methoxy or ethoxy groups and x is between 2 and 4.

The foregoing silicone-based surfactants can be used as such or dissolved in solvents such as, for example, glycols, soybean oil, etc. The reaction mixture contains from about 0.1 to about 3 phpp of silicone-based surfactant, and preferably from about 0.2 to about 1.5 phpp. The amount used can be adjusted to achieve the required foam cell structure and foam stabilization.

The polyisocyanates that are useful in the polyurethane foam formation process of this invention are organic polyisocyanate compounds that contain at least two isocyanate groups and generally will be any of the known aromatic or aliphatic polyisocyanates. Suitable organic polyisocyanates include, for example, the hydrocarbon diisocyanates, (e. g. the alkylenediisocyanates and the arylene diisocyanates), such as methylene diphenyl diisocyanate (MDI) and 2,4- and 2,6- toluene diisocyanate (TDI), as well as known triisocyanates and polymethylene poly(phenylene isocyanates) also known as polymeric or crude MDI. For semiflexible and flexible foams, the preferred isocyanates generally are, e. g., mixtures of 2,4-tolulene diisocyanate and 2,6-tolulene diisocyanate (TDI) in proportions by weight of about 80% and about 20% respectively and also about 65% and about 35% respectively; mixtures of TDI and polymeric MDI, preferably in the proportion by weight of about 80% TDI and about 20% of crude polymeric MDI to about 5% TDI and about 95% crude polymeric MDI; and all blends of polyisocyanates of the MDI type.

The amount of polyisocyanate included in the foam formulations used relative to the amount of other materials in the formulations is described in terms of "Isocyanate Index". "Isocyanate Index" means the actual amount of polyisocyanate used divided by the theoretically required stoichiometric amount of polyisocyanate required to react with all the active hydrogen in the reaction mixture multiplied by one hundred (100) (see, e. g., Oertel, Polyurethane Handbook, Hanser Publishers, New York, NY. (1985)). The Isocyanate Indices in the reaction mixtures used in the process of this invention generally are between 60 and 140. More usually, the Isocyanate Index is: for flexible TDI foams, typically between 85 and 120; for molded TDI foams, normally between 90 and 105; and for molded MDI foams most often between 70 and 90.

Active hydrogen-containing compounds for use with the foregoing polyisocyanates in forming the polyurethane foams of this invention are polyether polyols. The polyols ordinarily have hydroxyl numbers in the range of from about 15 to about 700. The hydroxyl numbers are preferably between about 100 to about 300 for semiflexible foams and between about 20 to about 60 for flexible foams. For flexible foams, the preferred functionality, i. e., the average number of hydroxyl groups per molecule of polyol, of the polyols is about 2 to about 4 and most preferably about 2.3 to about 3.5.

Polyols which can be used herein, either alone or in admixture, can be any of the following non-limiting classes:
a) polyether polyols derived from the reaction of poly hydroxy alkanes with one or more alkylene oxides, e. g., ethylene oxide, propylene oxide, etc.;
b) polyether polyols derived from the reaction of high-functionality alcohols, sugar alcohols, saccharides and/or high functionality amines, if desired in admixture with low-functionality alcohols and/or amines with alkylene oxides, e. g., ethylene oxide, propylene oxide, etc.;
c) polyether polyols derived from the reaction of phosphorus and polyphosporus acids with alkylene oxides, e. g., ethylene oxide, propylene oxide, etc.;
d) polyether polyols derived from the reaction of polyaromatic alcohols with alkylene oxides, e. g., ethylene oxide, propylene oxide, etc.;
e) polyether polyols derived from the reaction of ammonia and/or an amine with alkylene oxides, e. g., ethylene oxide, propylene oxide, etc.;

For flexible foams, preferred types of alkylene oxide adducts of polyhydroxyalkanes are the ethylene oxide and propylene oxide adducts of aliphatic trihydroxyalkanes.

Grafted or polymer polyols are used extensively in the production of flexible foams and are, along with standard polyols, one of the preferred class of polyols useful in forming the polyurethane foams of this invention. Polymer polyols are polyols that contain a stable dispersion of a polymer, for example in the polyols (a) to (e) above and more preferably the polyols of type (a).

Water is generally used as a reactive blowing agent in flexible foams. In the production of flexible slabstock foams, water generally can be used in concentrations of, e. g., between about 1.5 to about 6.5 parts per hundred parts of polyol (phpp), and more often between about 2.5 to about 5.5 phpp. Water levels for TDI molded foams normally range, e. g., from about 3 to about 4.5 phpp. For MDI molded foam, the water level, for example, is more normally between about 2.5 and about 5 phpp. However, as one skilled in the art would readily appreciate, the water level is typically set in accordance with the desired foam density. Suitable levels of blowing agent are known to the skilled person. For example, high density semiflexible polyurethane foams, the water level can be as low as about 0.2 phpp. Physical blowing agents such as, for example, blowing agents based on volatile hydrocarbons or halogenated hydrocarbons and other non-reacting gases can also be used in the production of polyurethane foams in accordance with the present invention. In the production of flexible slabstock foams, water is the main blowing agent; however, other blowing agents can be used as auxiliary blowing agents. For flexible slabstock foams, the preferred auxiliary blowing agents are carbon dioxide and dichloromethane (methylene chloride). Other blowing agents may also be used such as fluorocarbons, e.g., chlorofluorocarbon (CFC), dichlorodifluoromethane, and trichloromonofluoromethane (CFC-11) or non-fluorinated organic blowing agents, e.g., pentane and acetone.

Flexible molded foams typically do not use an inert, auxiliary blowing agent, and in any event incorporate less auxiliary blowing agents than slabstock foams. However, there is a great interest in the use of carbon dioxide in some molded technology. MDI molded foams in Asia and in some developing countries use methylene chloride, CFC-11 and other blowing agents. The quantity of blowing agent varies according to the desired foam density and foam hardness as recognized by those skilled in the art. When used, the amount of hydrocarbon-type blowing agent varies from, e.g., a trace amount up to about 50 parts per hundred parts of polyol (phpp) and CO₂ varies from, e.g., about 1 to about 10%.

Catalysts that can be used for the production of the polyurethanes include, but are not limited to, delayed action catalysts, tertiary amines of both the non-reactive (fugitive) and reactive types, etc. Reactive amine catalysts are compounds which contain one or more active hydrogens and, as a consequence, can react with the isocyanate and be chemically bound in the polyurethane polymer matrix. For the production of flexible slabstock and molded foams, the preferred amine catalysts are bis(N,N-dimethylaminoethyl)ether and 1,4-diazabicyclo[2.2.2]octane. Metal salt catalysts also can and often are used in polyurethane foam formulations. For flexible slabstock foams, the generally preferred metal salt is stannous octoate. Metal salt catalysts are ordinarily used in small amounts in polyurethane formulations, e.g., in amounts ranging from about 0.001 phpp to about 0.5 phpp.

Various additives can also be employed in preparing the foam which serve to provide different properties. Crosslinking agents or chain lengthening agents having at least two hydrogen atoms, capable of reacting with the isocyanates, can be added to the reaction mixture, e.g., compounds having hydroxyl and/or amino and/or carboxyl groups. Fillers, e.g., clay, calcium sulfate, barium sulfate, ammonium phosphate, etc., can be added to lower cost and imparts specific physical properties. Dyes can be added for color and fibrous glass or synthetic fibers can be added for strength. In addition, plasticizers, deodorants, foam-stabilizing agents, pigments, stabilizers against aging and weathering, flame retardants, and fungistatic and bacteriostatic agents can be added.

Crosslinkers which may be used in the production of polyurethane foams are typically small molecules; usually less than 350 molecular weight, which contain active hydrogens for reaction with the isocyanate. The functionality of a crosslinker is greater than 3 and preferably between 3 and 5. The amount of crosslinker used can vary between about 0.1 phpp and about 20 phpp and the amount used is adjusted to achieve the required foam stabilization or foam hardness. Examples of crosslinkers include glycerine, diethanolamine, triethanolamine and tetrahydroxyethylethylenediamine.

Chain extenders are preferably selected from 1,4-butanediol, 1,6-hexanediol, 1,8-octanediol, 1,9-nonadiol, 1,10-decanediol 1,4-cyclohexane dimethanol, p-xyleneglycol, 1,4-bis (2-hydroxyethoxy) benzene and 1,12-dodecanediol, 1,4-butanediol is particularly preferred.

Temperatures useful for the production of polyurethanes vary depending on the type of foam and specific process used for production as well understood by those skilled in the art. Flexible slabstock foams are usually produced by mixing the reactants generally at an ambient temperature of between about 20°C and about 40°C. The conveyor on which the foam rises and cures is essentially at ambient temperature, which temperature can vary significantly depending on the geographical area where the foam is made and the time of year. Flexible molded foams usually are produced by mixing the reactants at temperatures between about 20°C and about 30°C. The mixed starting materials are fed into a mold typically by pouring. The mold preferably is heated to a temperature between about 20°C and about 70°C, and more often between about 40°C and about 65°C. The preferred process used for the production of flexible slabstock foams and molded foams in accordance with the present invention is the "one-shot" process or the quasi prepolymer process where the starting materials are mixed and reacted in one step.

The basic procedure used to mix the reactants and prepare laboratory foam pads for evaluation of foam properties was as follows:
1. The formulation ingredients are weighed in preparation for sequential addition to an appropriate mixing container (cardboard cup).
2. A premix of water, catalysts, and optionally a crosslinker was prepared in an appropriate container.
3. A polyol, with, optionally, a cell opener (for MDI formulations), the premix, and silicone surfactant are mixed thoroughly in the cardboard cup using a drill press at 2000 rpm.
4. The isocyanate was added and mixed with the other reactant ingredients.
5. The reacting mixture was poured into a 30x30x10cm aluminum mold. The mold temperature was controlled at 60°C (TDI) or 50°C (MDI) by thermostat controlled hot water circulation. The mold lid had vent openings at the four corners.

Tables III provide data of the sub-surface cell structure of the foams to permit comparison of the different silicone-based surfactants used in the examples below. Table V provides comparison between the silicone-based surfactant of the subject invention and the commercially known silicone surfactants for MDI foams.

The meaning of terms and abbreviations used in the following examples are given in table I:

**TABLE I**

| Term or Abbreviation | Meaning |
|---|---|
| Polyether polyol OH 28 | Reactive triol with 28 OH No. |
| TDI 80/20 | Tolylene diisocyanate and isomer blends thereof |
| MDI | Methylene diphenyl diisocyanate and blends thereof |
| Niax Catalyst A-33 | A 33% solution of TEDA in diphenyl guanidine (DPG) (available from Crompton Corporation, Middlebury, CT) |
| Niax Catalyst C-174 | A blend of tertiary amine catalysts (available from Crompton Corporation, Middlebury, CT) |
| Niax Catalyst UAX-1172 | Zero emission amine catalyst (available from Crompton Corporation, Middlebury, CT) |
| Niax Catalyst UAX-1188 | Zero emission amine catalyst (available from Crompton Corporation, Middlebury, CT) |
| C9 | Niax Silicone-L-3001 HR MDI silicone oil, a low molecular weight polydimethyl siloxane oil with formula MDₓM with x ranging from 2 to 16 and having no hydroxyl end groups (available from Crompton Corporation, Middlebury, CT) |
| C10 | Niax Silicone-L-3002 HR MDI silicone oil, a low molecular weight polydimethyl siloxane oil with formula MDₓM with x ranging from 2 to 16 and having no hydroxyl end groups (available from Crompton Corporation, Middlebury, CT) |
| C11 | Niax Silicone-L-3003 HR MDI and TDI/MDI silicone oil, a low molecular weight polydimethyl siloxane oil with formula MDₓM with x ranging from 2 to 16 and having no hydroxyl end groups (available from Crompton Corporation, Middlebury, CT) |
| FTC | Force to Crush |
| kg | kilograms |
| m | meter |
| % | percent by weight |
| phpp | parts per hundred parts by weight of polyol |
| N | Newton |

While the scope of the present invention is defined by the appended claims, the following non-limiting examples illustrate certain aspects of the invention and, more particularly, describe methods for evaluation. The examples are presented for illustrative purposes and are not to be construed as limitations on the present invention.

In the examples which follow, all reactions involved using the materials and amounts thereof are set forth in Table II. The silicone-based surfactants and amounts thereof as set forth in Table III were added to the formulation of Table II. The formulation presented hereafter in Tables II and III is an evaluation formulation typical for producing a MDI/TDI high resilience (HR) molded foam.

### EXAMPLES 1-11 and COMPARATIVE EXAMPLES 12-13

Table II set forth below shows the formulation used in preparing the foams of Examples 1-11 and Comparative Examples 12-13. Table III shows the different silicone-based surfactants added with the formulation components of Table II to form the polyurethane foam. The skin of foam pad is cut with a thickness of about 1 cm. This allows the observation of the sub-surface structure by transparency to look to the skin and allows to view the cell structure of the bulk foam. This table shows that the new silicone structures can give adequate skin structures at a low use level (this helps achieve low VOC emissions by definition).

**TABLE II**

| Formulation | Phpp |
|---|---|
| Polyether Polyol (OH 28) | 100 |
| Water | 3.2 |
| Niax Catalyst A-33 | 0.3 |
| Niax Catalyst C-174 | 0.3 |
| Silicone Surfactant | variable |
| TDI 80/20 | 20.6 |
| MDI | 20.6 |
| Density kg/m³ | 47 |

**TABLE III**

| | | Hydrido Silicone | | | | Branching group Composition | Silicone stabilizer | | | |
|---|---|---|---|---|---|---|---|---|---|---|
| Ex. | Surfactant | T | x | y | u | | % Active | % Silicone oil | Parts | Subsurface Structure |
| 1 | C1 | 2 | 0 | 0 | 0 | allylalcohol | 3 | - | 2 | Coarse |
| 2 | C2 | 2 | 1 | 0 | 0 | allylalcohol | 3 | - | 2 | Coarse |
| 3 | C3 | 2 | 3 | 0 | 0 | allylalcohol | 3 | - | 1 | Fine |
| 4 | C4 | 2 | 3 | 0 | 0 | allylalcohol | 3 | - | 0.5 | Coarse |
| 5 | C5 | 2 | 4 | 0 | 0 | allylalcohol | 3 | - | 1 | Fine |
| 6 | C6 | 2 | 4 | 0 | 0 | allylalcohol | 3 | - | 0.5 | Fine |
| 7 | C7 | 2 | 4 | 0 | 0 | allylalcohol | 1 | 1 | 0.5 | Fine |
| 8 | C8 | 2 | 4 | 0 | 0 | allylalcohol | 1 | 0.75 | 0.5 | Intermediate to fine |
| 9 | C9 | 2 | 0 | 0 | 0 | allylethoxyethanol | 3 | - | 2 | Coarse |
| 10 | C10 | 2 | 2 | 0 | 0 | allylethoxyethanol | 3 | - | 1 | Coarse |
| 11 | C11 | 0 | 0 | 2 | 2 | allylethoxyethanol | 3 | - | 1 | Very coarse |
| 12 | C12 | 2 | 5 | 0 | 0 | allylethoxyethanol | 3 | - | 1 | Fine |
| 13 | C13 | 2 | 5 | 0 | 0 | allylethoxyethanol | 3 | - | 0.5 | Intermediate |

### COMPARATIVE EXAMPLES A-C AND EXAMPLE 14-16

Table IV set forth below shows the formulation components used in preparing the foams of Comparative Examples A-C and Examples 14-16. Table V shows the different silicone-based surfactants added with the formulation components of Table IV to provide a polyurethane foam.

**TABLE IV**

| Formulation | Phpp |
|---|---|
| Polyether Polyol (OH 28) | 100 |
| Cell opener | 1.5 |
| Water (total) | 0.6 |
| Niax Catalyst UAX-1172 | 1.0 |
| Niax Catalyst UAX-1188 | 0.5 |
| Silicone Surfactant | variable |
| MDI (Index) | 80 |

**TABLE V**

| Comp. Ex./Ex | Surfactant | phpp | Density (kg/m³) | Cell Structure | FTC (N) |
|---|---|---|---|---|---|
| A | C9 | 0.5 | 51.3 | intermediate to fine | 350 |
| 14 | C7 | 0.3 | 51.4 | intermediate to fine | 420 |
| | | | | | |
| B | C10 | 0.5 | 51.0 | fine | 706 |
| 15 | C7 | 0.5 | 50.4 | fine | 698 |
| | | | | | |
| C | C11 | 0.5 | 51.7 | very fine | 1105 |
| 16 | C7 | 0.8 | 51.7 | Very fine | 1101 |

Examples 14-16 show the use of the same subject silicone based surfactant at different levels relative to Comparative Examples A-C of the commercial Crompton silicone surfactants, in a typical MDI formulation. The data demonstrate that the silicone-based surfactants of the present invention give similar stabilisation as measured by FTC compared to silicone-based surfactants outside the scope of the present invention, i.e., surfactants C9, C10 and C11. It is also important to note that the same cell structure, i.e., foam performance of Examples 14-16 matches the one of commercial products.

### Volatile Organic Compounds (VOC)

Table VI gives the results of VOC emission tested according to Mercedes method (DaimlerChrylser AG Method PVWL 709). The data shows that a drastic reduction in emission is achieved when using the silicone-based surfactants within the scope of the of the present invention (i. e., surfactants C6 and C7) compared to a commercial silicone surfactant.

**TABLE VI**

| Formulation | phpp | phpp | phpp |
|---|---|---|---|
| Polyether polyol (OH 28) | 100 | 100 | 100 |
| Cell opener | 1.5 | 1.5 | 1.5 |
| Water (total) | 0.6 | 0.6 | 0.6 |
| Niax Catalyst UAX-1172 | 1 | 1 | 1 |
| Niax Catalyst UAX-1188 | 0.5 | 0.5 | 0.5 |
| Niax Silicone L-3001 (C9) | 0.8 | | |
| C7 | | 0.8 | |
| C6 | | | 0.8 |
| MDI (index) | 80 | 81 | 82 |
| VOC expressed in ppm | 180 | 13 | 4 |

## Claims

1. A process for preparing a polyurethane foam having reduced volatile organic compound ("VOC") emissions comprising the step of reacting a polyisocyanate with a polyether polyol having at least two hydroxyl groups and from 0.1 to 3 phpp of a silicone-based surfactant composition as a stabilizer for the foam, the silicone-based surfactant composition comprising a first silicone having the general formula:
M*ₜDₓD*_{y}Mᵤ
wherein
M* is R¹₂RSiO_{0.5};
D is R¹₂SiO;
D* is R¹RSiO;
M is R¹₃SiO_{0.5};
R¹ is an aromatic or saturated aliphatic hydrocarbon group;
R is a divalent hydrocarbon moiety, optionally interrupted with methoxy or ethoxy groups, and having a hydroxyl end group,
t and u are integers from 0 to 2;
t+u=2;
x+y=1 to 4 and
t+y is 1 to 2,
in the presence of a blowing agent and under conditions sufficient to form the polyurethane foam.

2. The process of claim 1, wherein R¹ of the silicone-based surfactant is an alkyl.

3. The process of any preceding claim, wherein the silicone-based surfactant composition further comprises a silicone oil or silicone copolymer.

4. The process of any preceding claim, wherein the blowing agent is water and wherein the step of reacting is conducted in the presence of one or more polyurethane foam additives selected from the group consisting of catalysts, crosslinkers, chain extenders and mixtures thereof.

5. The process of any preceding claim wherein R is not interrupted with methoxy or ethoxy groups.

6. The process of any preceding claim, wherein the first silicone is of the general formula: 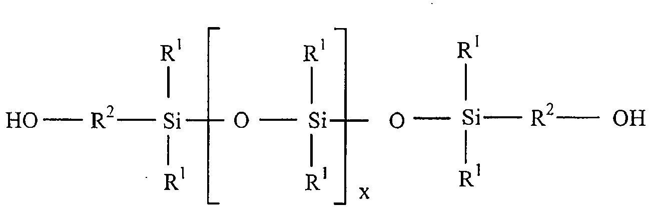 wherein
x is an integer from 2 to 4,
R¹ each are alkyl; and
R² each are a linear alkylene group of one to 10 carbon atoms, optionally interrupted with methoxy or ethoxy groups.

7. The process of claim 6 wherein R² is not interrupted with methoxy or ethoxy groups.

8. A polyurethane foam obtained from a process of any preceding claim.

9. An article comprising the polyurethane foam of claim 6.

## Patentansprüche

1. Prozess zum Herstellen eines Polyurethanschaumstoffs mit reduzierten Emissionen von flüchtigen organischen Verbindungen ("VOC"), welcher den Schritt des Reagierens eines Polyisocyanats mit einem Polyetherpolyol mit mindestens zwei Hydroxylgruppen und 0,1 bis 3 phpp einer silikonbasierten Tensidzusammensetzung als Stabilisator für den Schaumstoff umfasst, wobei die silikonbasierte Tensidzusammensetzung ein erstes Silikon mit der allgemeinen Formel:
M*tDₓD*_{y}Mᵤ
umfasst,
wobei
M* R¹₂RSiO_{0,5} ist;
D R¹₂SiO ist;
D* R¹RSiO ist;
M R¹₃SiO_{0,5} ist;
R¹ eine aromatische oder gesättigte aliphatische Kohlenwasserstoffgruppe ist;
R eine bivalente Kohlenwasserstoffkomponente, optional unterbrochen mit Methoxy- oder Ethoxy-Gruppen und eine Hydroxyl-Endgruppe aufweisend, ist,
t und u ganze Zahlen von 0 bis 2 sind;
t+u=2;
x+y=1 bis 4 und
t+y 1 bis 2 ist,
bei Vorhandensein eines Treibmittels und unter Bindungen, die zum Bilden des Polyurethanschaumstoffs ausreichend sind.

2. Prozess nach Anspruch 1, wobei R¹ des silikonbasierten Tensids Alkyl ist.

3. Prozess nach einem vorhergehenden Anspruch, wobei die silikonbasierte Tensidzusammensetzung weiterhin ein Silikonöl oder Silikoncopolymer umfasst.

4. Prozess nach einem vorhergehenden Anspruch, wobei das Treibmittel Wasser ist und wobei der Schritt des Reagierens bei Vorhandensein eines oder mehrerer Polyurethanschaumstoffzusätze gewählt aus der Gruppe bestehend aus Katalysatoren, Vernetzern, Kettenverlängerern und Mischungen derselben durchgeführt wird.

5. Prozess nach einem vorhergehenden Anspruch, wobei R nicht mit Methoxy- oder Ethoxy-Gruppen unterbrochen ist.

6. Prozess nach einem vorhergehenden Anspruch, wobei das erste Silikon von der allgemeinen Formal: 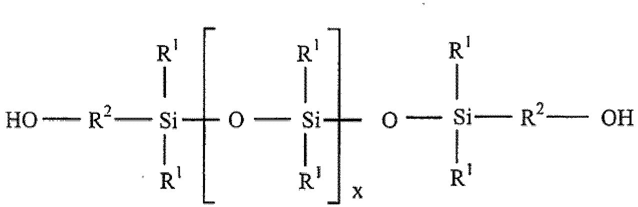 ist,
wobei
x eine ganze Zahl von 2 bis 4 ist,
R¹ jeweils Alkyl sind; und
R² jeweils eine lineare Alkylengruppe mit ein bis 10 Kohlenstoffatomen, optional unterbrochen mit Methoxy- oder Ethoxy-Gruppen, sind.

7. Prozess nach Anspruch 6, wobei R² nicht mit Methoxy- oder Ethoxy-Gruppen unterbrochen ist.

8. Polyurethanschaumstoff, der aus einem Prozess nach einem vorhergehenden Anspruch erhalten ist.

9. Erzeugnis, welches den Polyurethanschaumstoff nach Anspruch 6 umfasst.

## Revendications

1. Procédé de préparation d'une mousse de polyuréthane ayant des émissions en composés organiques volatils (« COV ») réduites comprenant l'étape consistant à faire réagir un polyisocyanate avec un polyéther polyol ayant au moins deux groupes hydroxyle et de 0,1 à 3 phpp d'une composition tensioactive à base de silicone en tant que stabilisant pour la mousse, la composition tensioactive à base de silicone comprenant une première silicone de formule générale :
M*tDₓD*_{y}Mᵤ
dans laquelle
M* est R¹₂RSiO_{0,5} ;
D est R¹₂SiO ;
D* est R¹RSiO ;
M est R¹₃SiO_{0,5} ;
R¹ est un groupe hydrocarbure aliphatique aromatique ou saturé ;
R est un fragment hydrocarbure divalent, éventuellement interrompu par des groupes méthoxy ou éthoxy, et ayant un groupe terminal hydroxyle,
t et u sont des entiers de 0 à 2 ;
t + u = 2 ;
x + y = 1 à 4 et
t + y vaut de 1 à 2,
en présence d'un agent de soufflage et dans des conditions suffisantes pour former la mousse de polyuréthane.

2. Procédé selon la revendication 1, dans lequel
R¹ dans le tensioactif à base de silicone est un alkyle.

3. Procédé selon une quelconque revendication précédente, dans lequel
la composition tensioactive à base de silicone comprend en outre une huile de silicone ou un copolymère de silicone.

4. Procédé selon une quelconque revendication précédente, dans lequel l'agent de soufflage est l'eau et dans lequel l'étape de réaction est effectuée en présence d'un ou plusieurs additifs de mousse de polyuréthane choisis dans le groupe constitué de catalyseurs, agents de réticulation, agents d'extension de chaîne et mélanges de ceux-ci.

5. Procédé selon une quelconque revendication précédente dans lequel R n'est pas interrompu par des groupes méthoxy ou éthoxy.

6. Procédé selon une quelconque revendication précédente, dans lequel
la première silicone est de formule générale : 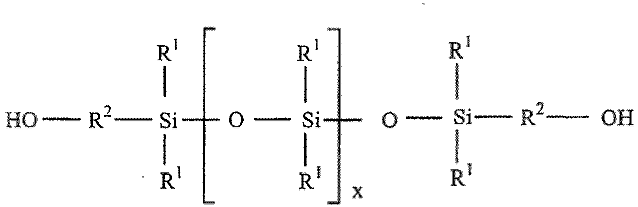 dans laquelle
x est un entier de 2 à 4,
les R¹ sont chacun un alkyle ; et
les R² sont chacun un groupe alkylène linéaire de un à 10 atomes de carbone, éventuellement interrompu par des groupes méthoxy ou éthoxy.

7. Procédé selon la revendication 6 dans lequel
R² n'est pas interrompu par des groupes méthoxy ou éthoxy.

8. Mousse de polyuréthane obtenue par un procédé selon une quelconque revendication précédente.

9. Article comprenant la mousse de polyuréthane selon la revendication 6.
